# EUROPÄISCHE PATENTSCHRIFT

(11) **EP 1 932 651 B1**
(45) Veröffentlichungstag und Bekanntmachung des Hinweises auf die Patenterteilung: **07.07.2010**
(21) Anmeldenummer: 06025608.8
(22) Anmeldetag: 11.12.2006
(51) Int. Cl.: B29C 65/08, B65B 51/22, B23K 20/10

(54) **Ultraschallschweisseinrichtung und Einrichtung zum Handhaben von Folienbeuteln**
Ultrasonic welding apparatus and device for handling film bags
Dispositif de soudage par ultrasons et appareil pour la manipulation des sachets plastiques

(43) Veröffentlichungstag der Anmeldung: 18.06.2008
(73) Patentinhaber: INDAG Gesellschaft für Industriebedarf mbH & Co. Betriebs KG, 69214 Eppelheim (DE)
(72) Erfinder: Wild, Hans-Peter, Dr., 69214 Eppelheim (DE); Kraft, Eberhard, 74924 Neckarbischofsheim (DE); Lechert, Frank, 69469 Weinheim (DE)
(74) Vertreter: Grünecker, Kinkeldey, Stockmair & Schwanhäusser Anwaltssozietät

(56) Entgegenhaltungen:
- EP-A- 0 007 558
- EP-A- 0 356 889
- DE-A1- 1 479 511
- DE-A1- 3 411 370
- FR-A- 2 067 838
- US-A- 4 187 768

## Beschreibung

Die Erfindung bezieht sich auf eine Ultraschallschweißeinrichtung der im Oberbegriff von Anspruch erläuterten Art.

Das Ultraschallschweißen wird gern zur Verbindung von Folienlagen oder anderen Materialien begrenzter Dicke, vorzugsweise aus thermoplastischen Kunststoffen, aber auch aus Metallen, wie beispielsweise Aluminium, eingesetzt (siehe z. B. EP-A-356 889 oder FR -A-2067838). Ein besonders bevorzugtes Anwendungsgebiet des Ultraschallschweißens ist die Herstellung von Folienbeuteln für Lebensmittel, insbesondere der bekannten Getränkebeutel. Eine Ultraschallschweißeinrichtung enthält herkömmlicherweise eine Sonotrode zum Erzeugen von Ultraschallschwingungen. Die Sonotrode wird mit einem gewissen Druck auf die zwischen ihr und einem Amboss befindlichen Folienlagen gepresst, wobei während des Schweißens sowohl die Sonotrode als auch der Amboss unter einem Winkel von 90° zur Richtung der Schwerkraft auf die Folienlagen einwirken. Der Amboss ist schwingend gelagert und z. B. durch eine Feder in Richtung auf die Sonotrode belastet. Die Ultraschallschwingungen erzeugen eine Reibungswärme an den Fügeflächen zwischen den Folienlagen, die das Material zum viskosen Fließen bringt und dadurch die Folien nach dem Auskühlen miteinander verbindet. Es hat sich jedoch herausgestellt, dass sich die Folienlagen trotz Halterung durch Halteeinrichtungen bzw. Unterstützung durch Förderbänder oder dgl. unter Einwirkung der Schwingungen und der Schwerkraft bewegen können, was unter Umständen zu einem unexakten Verlauf der Schweißlinien führen kann. Dies macht sich insbesondere dann negativ bemerkbar, wenn beispielsweise bei der Herstellung von Folienbeuteln ein gefüllter Beutel verschlossen werden soll. Die gefüllten Beutel müssen naturgemäß in aufrechter Position gefördert werden, wodurch zumindest ein Teil des Gewichts des gefüllten Beutels vom Material im Bereich der Schweißnaht aufgenommen werden muss. Da dort das Material durch die Ultraschallschwingungen zum viskosen Fließen gebracht wird, ist es selbst durch eine optimale Unterstützung des Beutels nicht immer möglich, ein Verschieben der Schweißnaht sicher zu verhindern.

Aus der US 4,187, 768, die eine Ultraschallschweißeinrichtung gemäß dem Oberbegriff des Anspruch 1 offenbart, ist ein Verfahren zum Herstellen eines Papierbehälters bekannt, bei der das Papier mit einer Beschichtung aus einer Kunststoff-Folie versehen wird und mit Hilfe von Ultraschall im Bodenbereich verschweißt wird. Der Bodenbereich enthält einen umbördelten Falz, der einen radial innen liegenden, senkrechten Steg aufweist und von dem die Außenwandung des Behälters schräg nach oben außen ansteigend beginnt Die Ultraschallverschweißung erfolgt im Bereich des umbördelten Randes, wobei die mit horizontaler Mittellinie angeordnete Sonotrode eine der Anstiegsschräge der Außenwandung des Behälters korrespondierend abgeschrägte Wirkfläche aufweist und der Amboss oder Halter eine Wirkfläche enthält, die parallel zum senkrechten Steg des Bördelflansches verläuft.

Die EP-A-7558 beschreibt ein Verfahren zum Ultraschallschweißen von schichtförmigem Material. Das Material wird in horizontaler Richtung über eine Rolle mit oder ohne Antrieb geführt, die gleichzeitig als Amboss für die Sonotrode der Ultraschallschweißeinrichtung dient. Die Sonotrode ist bezüglich der Senkrechten schräg gestellt und wirkt derart auf die zu verschweißenden Materiallagen ein, dass diese in der gewünschten Förderrichtung vorwärts geschoben werden.

Der Erfindung liegt somit die Aufgabe zugrunde, eine Ultraschallschweißeinrichtung zu schaffen, die korrekte Schweißnähte liefert.

Die Aufgabe wird durch die im Anspruch 1 angegebenen Merkmale gelöst.

Durch die erfindungsgemäße Schrägstellung der Sonotrode und/oder des Amboss bzw. seiner Belastungseinrichtung wird durch das Ultraschallschweißen eine der Richtung der Schwerkraft entgegengerichtete Kraftkomponente der Schweißkraft in das Schweißgut eingebracht, die ausreicht, den Schwerkrafteinfluss zumindest so weit zu eliminieren, dass die Schweißnähte nunmehr exakt an der vorbestimmten Stelle verlaufen. Es wurde überraschenderweise festgestellt, dass durch die erfindungsgemäße Ausgestaltung beispielsweise der Einfluss einer kurzzeitigen Freigabe der Folienlagen im Schweißspalt, verursacht durch die größere Trägheit im Schwingverhalten des mechanischen Systems (Amboss mit Belastungseinrichtung) gegenüber den Ultraschallschwingungen der Sonotrode, ausgeglichen werden kann, so dass unter Einfluss der Schwerkraft die Schweißnaht nicht mehr nach oben abgelenkt wird.

Vorteilhafte Weiterbildungen der Erfindung sind den Unteransprüchen zu entnehmen.

Es wurde festgestellt, dass bereits eine vergleichsweise kleine Abweichung des Winkels der Krafteinleitung der Schweißkraft von der üblicherweise senkrecht zur Schwerkraft verlaufenden Richtung ausreicht, um den erfindungsgemäß angestrebten Effekt zu erreichen.

Bevorzugt sollten jedoch die Wirkebenen der Sonotrode und/oder des Ambosses parallel zur Richtung der Schwerkraft verlaufen, um eine Knickung der im Aufnahmespalt befindlichen Folienlagen zu vermeiden.

Die vorliegende Erfindung ist auch anwendbar, wenn mehr als eine Schweißnaht gleichzeitig gelegt werden soll, was durch wenigstens zwei im Abstand untereinander angeordneten Schweißlippen bewirkt wird.

Die erfindungsgemäße Ultraschalischweißeinrichtung ist besonders vorteilhaft einsetzbar bei einer Einrichtung zum Handhaben von Folienbeutein, in der gefüllte Folienbeutel in einer Fördereinrichtung aufrecht gefördert werden.

Zweckmäßigerweise werden die gefüllten Folienbeutel durch eine geeignet ausgebildete Fördereinrichtung gegen Schwerkraftwirkung weiter unterstützt, was beispielsweise durch eine Klemmeinrichtung zum seitlichen Klemmen der Folienbeuteln geschehen kann.

Ein Ausführungsbeispiel der Erfindung wird nachfolgend anhand der Zeichnungen näher erläutert. Es zeigen:
- Figur 1: eine stark schematisierte Seitenansicht einer erfindungsgemäßen Ultraschall- schweißeinrichtung,
- Figur 2: das herausvergrößerte Detail A aus Figur 1,
- Figur 3: die Darstellung gemäß Figur 2 mit vom Amboss abgehobener Sonotrode, und
- Figur 4: eine Übersichtsdarstellung der Krafteinleitung.

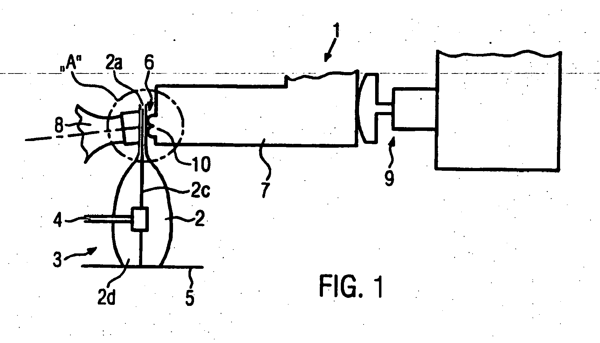

Figur 1 zeigt in stark schematisierter Darstellung eine erfindungsgemäße Ultraschallschweißeinrichtung 1, die hier zum Verschweißen von Folienlagen beidseitig einer Einfüllöffnung 2a eines Follenbeutels 2 eingesetzt wird. Der Folienbeutel 2 enthält Wandungen aus einem Folienmaterial, das eine oder mehrere Lagen aus dem gleichen oder unterschiedlichen Werkstoffen enthalten kann, also beispielsweise thermoplastische Kunststofffolien oder Metallfolien oder dergleichen. Die ggf. erforderlichen Seitennähte 2c und der Boden 2d sind bereits geschlossen. Der Folienbeutel 2 ist bevorzugt einer der üblichen Getränkebeutel.

Der Folienbeutel 2 wird aufrecht, das heißt mit nach oben weisender Einfüllöffnung 2a und bereits gefüllt (d. h. mit ausgebauchten Seitenwänden) der Ultraschallschweißeinrichtung 1 durch eine Fördereinrichtung 3 zugeführt. Die Fördereinrichtung 3 kann beliebig ausgebildet und an den zu transportierenden Gegenstand angepasst sein. Im dargestellten Ausführungsbeispiel enthält die Fördereinrichtung 3 bevorzugt wenigstens einen Greifer 4, der ein-oder zweiseitig an den Seitennähten 2c des Folienbeutels 2 angreift und diesen entweder beim Durchgang durch die Ultraschallschweißeinrichtung 1 bewegt oder dabei unterstützt. Die Fördereinrichtung 3 kann weiterhin eine Unterstützungsfläche 5, beispielsweise in Form eines Förderbandes oder dergleichen aufweisen, so dass das Gewicht des Folienbeutels 2 mit samt seiner Füllung durch die Fördereinrichtung 3 aufgenommen wird.

Durch die Fördereinrichtung 3 wird der Folienbeutel 2 der Ultraschallschweißeinrichtung 1 so zugeführt, dass der zu verschweißende Bereich (im dargestellten Ausführungsbeispiel Folienlagen an gegenüberliegenden Wandungsabschnitten im Bereich unterhalb der Einfüllöffnung 2a), senkrecht zur Zeichnungsebene der Figur 1, in einen Aufnahmespalt 6 zwischen einem Amboss 7 und einer Sonotrode 8 (Ultraschallhammer) der Ultraschallschweißeinrichtung 1 gelangt. Die Betriebsweise einer Ultraschallschweißeinrichtung 1 ist bekannt und muss hier nicht näher erläutert werden. Zusammenfassend ist zu sagen, dass die Ultraschallschwingungen der Sonotrode 8 unter Einwirkung eines Anpressdruckes der Sonotrode 8 gegen den Amboss 7 dem Schweißgut die zum Schweißen nötige Ultraschallenergie zuführen. Der Anpressdruck wird bestimmt und abgefedert durch eine Vorspanneinrichtung 9, die bevorzugt schwingend gefedert ist und den Amboss 7 in Richtung auf die Sonotrode 8 vorspannt. Am Amboss 7 sind an einer dem Folienbeutel 2 zugewandten Basisfläche 10a Schweißlippen 10 vorgesehen, die die Lage der Schweißnähte und deren Anzahl bestimmen. Im dargestellte Ausführungsbeispiel sind wenigstens zwei (oder wenigstens zwei Gruppen) im Abstand untereinander angeordneter Schweißlippen vorgesehen.

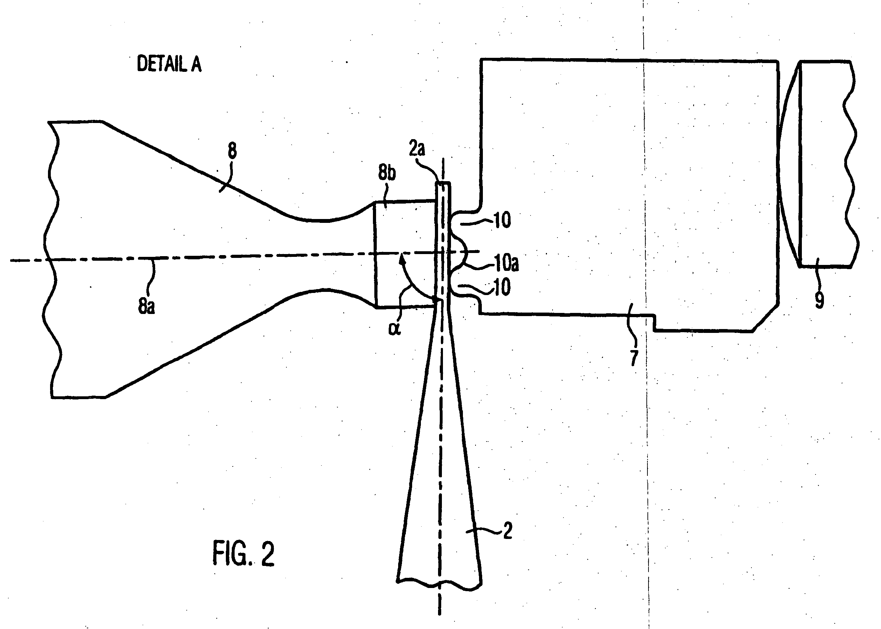

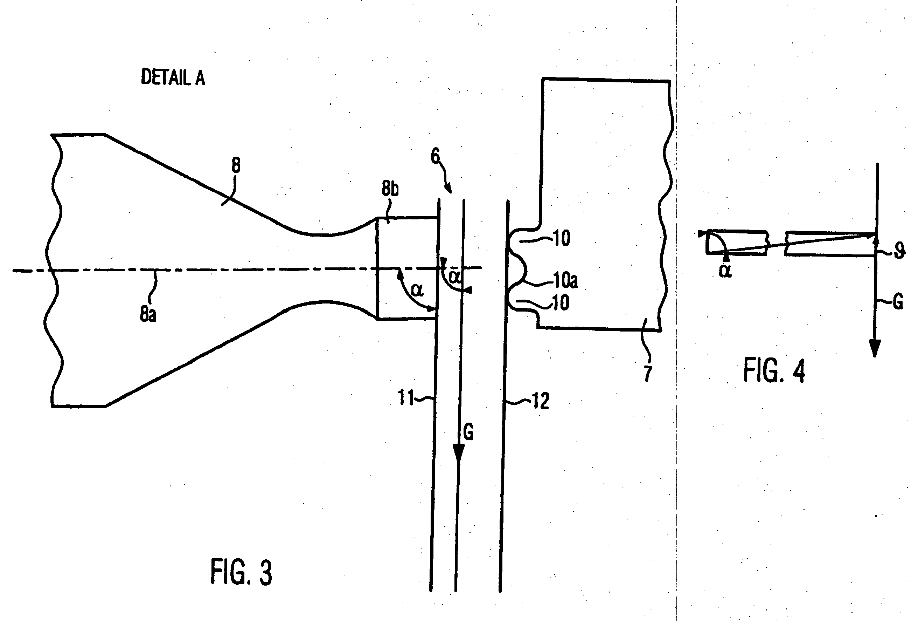

Wie dies besser aus den Figuren 2 bis 4 ersichtlich ist, ist die erfindungsgemäße Ultraschallschweißeinrichtung 1 so ausgebildet, dass sich eine entgegen der Richtung der Schwerkraft G gerichtete Komponente ϑ der Schweißkrafteinleitung ergibt, wobei die Schweißkraft primär aus der Anpresskraft im Aufnahmespalt 6 resultiert. Die entgegen der Richtung der Schwerkraft gerichtete Komponente 9 der Krafteinleitung unterstützt die zu verschweißenden Folienlagen von unten nach schräg oben, so dass sowohl die Auswirkungen der unterschiedlichen Trägheit von Sonotrode und Amboss, als auch die in die Folienlagen eingeleiteten Zugkräfte, beispielsweise durch die Auswölbung der Seitenwände durch den Inhalt, als auch die Wirkung der Schwerkraft bei nicht von unten unterstützten Beuteln 2 kompensiert werden, so dass gerade verlaufende und nicht "verrutschte" Schweißlinien möglich sind. Es wurde festgestellt dass dazu eine relativ kleine Winkelabweichung nach schräg oben von der normalerweise horizontal, d. h. senkrecht zur Schwerkraftrichtung G, verlaufende Krafteinleitung ausreicht Besonders gute Ergebnisse wurden mit einer Winkelabweichung von lediglich etwa 2°, das heißt einem Winkel α zur Schwerkraftrichtung G von etwa 88° erreicht Der Winkel α kann jedoch auch beispielsweise mehr als 70°, zwischen 80° und 89,5°, zwischen 85° bis 89° oder zwischen 87° bis 89° liegen.

Die entgegen der Schwerkraftwirkung gerichtete Komponente ϑ wird bevorzugt dadurch erzielt, dass bei einer parallel zu einer Mittellinie verlaufenden Krafteinteitung diese Mittellinie unter dem Winkel α schräg zur Richtung der Schwerkraft G angeordnet wird. Dies wird auf einfachste Weise dadurch erreicht, dass die Sonotrode 8 schräg gestellt wird, das heißt ihre Mittellinie 8a parallel zur Mittellinie der Krafteinleitung unter dem Winkel α ausgerichtet wird. Auf diese Weise erzeugen sowohl der Anpressdruck an den Amboss 7 als auch der Schalldruck durch die Ultraschallschwingungen die Komponente ϑ. Es ist jedoch auch möglich, dass zusätzlich oder alternativ auch die Einleitung der Gegenkraft durch den Amboss 7 unter dem Winkel α erfolgt, wobei bevorzugt der Amboss 7 und/oder die Vorspanneinrichtung 9 schräg gestellt wird.

Im dargestellten Ausführungsbeisplel verläuft die Wirkebene 11 der Sonotrode 8 und die Wirkebene 12 des Ambosses 7 parallel zur Schwerkraftrichtung G und demzufolge parallel zueinander, so dass sich der Aufnahmespalt 6 mit einer im wesentlichen konstanten Breite in Richtung der Schwerkraft G erstreckt. Als Wirkebene 11, 12 wird diejenige Ebene definiert, in der die im wesentlichen die Schweißung bewirkenden Punkte an der Sonotrode 8 und dem Amboss 7 liegen. Dies bedeutet, dass ein Kopf 8b der Sonotrode 8 so ausgebildet ist, dass seine in der Wirkebene 11 liegende Vorderfläche den Winkel α zur Mittellinie 8a der sonotrode 8 einnimmt. Es ist jedoch auch möglich, schräg zur Schwerkraftrichtung verlaufende Wirkebenen an Sonotrode und/oder Amboss einzusetzen, wenn die dadurch bewirkte leichte Abwinkelung der Bereiche oberhalb der Schweißnaht gegenüber den Bereichen unterhalb der Schweißnaht nicht stört

Zum Verschweißen der Folienlagen am Folienbeutel 2 werden diese durch die Fördereinrichtung 3 in den Aufnahmespalt 6 eingeführt und unter Einleitung einer schräg nach oben gerichteten Schweißkraft miteinander verbunden. Im Idealfall ist der Winkel α so auf die die Folienlagen nach unten ziehenden Kräfte, wie z. B. die Auswölbung der Seitenwände eines Beutels durch den Inhalt, das Gewicht des Folienbeutels 2 usw. abgestimmt, dass sie zusätzlich zur erfindungsgemäßen Absicherung gegen ein "Absacken" nach unten, auch nicht nach oben geschoben werden können, d. h. dass die schräg nach oben gerichtete Kraftkomponente der Schweißkraft die Wirkung der nach unten gerichteten Kräfte (Schwerkraft, Zugkraft usw.) kompensiert. Zur Sicherheit kann jedoch die schräg nach oben gerichtete Kraftkomponente größer als der Einfluss dieser Kräfte gewählt werden und durch eine geeignete Halterung, beispielsweise durch seitlich und/oder oberhalb der Schweißnaht angreifende Greifer 4, eine ausreichende Gegenkraft erzeugt werden, die ein Anheben der Folienlagen verhindert.

In Abweichung des beschriebenen und gezeichneten Ausführungsbeispiels kann die entgegen der Schwerkraft gerichtete Komponente ϑ auch dadurch erreicht werden, dass beide Wirkebenen parallel zueinander geneigt werden, das heißt der Aufnahmespalt schräg gestellt wird. Bei dieser Ausgestaltung erzeugt lediglich die Anpresskraft die der Schwerkraft entgegengerichtete Komponente der Krafteinleitung.

## Patentansprüche

1. Ultraschallschweißeinrichtung (1), mit einer Sonotrode (8) und einem Amboss (7) zum Verschweißen von Folienlagen unter Krafteinleitung, wobei sich die Folienlagen in einem zwischen einer Wirkebene (11) der Sonotrode (8) und einer Wirkebene (12) des Amboss (7) vorgesehenen Aufnahmespalt (6) befinden, **dadurch gekennzeichnet, dass** die Mittellinie der Krafteinleitung der Sonotrode (8) und/oder des Amboss (7) und/oder seiner Vorspanneinrichtung (9) zum Erzeugen einer der Richtung der Schwerkraft (G) entgegengerichteten Komponente (ϑ) der Krafteinleitung beim Verschweißen unter einem von 0° und 90° abweichenden Winkel (α) zur Richtung der Schwerkraft (G) schräggesteilt ist.

2. Ultraschallschweißeinrichtung (1) nach Anspruch 1, **dadurch gekennzeichnet, dass** die Krafteinleitung beim Verschweißen unter einem Winkel (α) gegenüber der Richtung der Schwerkraft (G) von mehr als 70°, bevorzugt zwischen 80° bis 89,5°, bevorzugt 85° bis 89° bevorzugt 87° bis 89° und insbesondere bevorzugt 88° erfolgt.

3. Ultraschallschweißeinrichtung nach Anspruch 1 oder 2, **dadurch gekennzeichnet, dass** die Wirkebene (11) der Sonotrode (8) parallel zur Richtung der Schwerkraft (G) verläuft.

4. Ultraschallschweißeinrichtung (1) nach einem der Ansprüche 1 bis 3, **dadurch gekennzeichnet, dass** die Wirkebene (12) des Amboss (7) parallel zur Richtung der Schwerkraft (G) verlauft.

5. Ultraschallschweißeinrichtung (1) nach einem der Ansprüche 1 bis 4, **dadurch gekennzeichnet, dass** der Amboss (7) und/oder die Sonotrode (8) mit einer Basisfläche (10a) und wenigstens zwei im Abstand untereinander angeordneten Schweißlippen (10) versehen sind.

6. Einrichtung zum Handhaben von Folienbeuteln (2), mit einer Fördereinrichtung (3) zum aufrechten Fördern von gefüllten Folienbeuteln (2) und einer Ultraschallschweißeinrichtung (1) nach einem der Ansprüche 1 bis 5 zum Verschließen der Folienbeutel (2).

7. Einrichtung zum Handhaben von Folienbeuteln (2) nach Anspruch 6, **dadurch gekennzeichnet, dass** die Fördereinrichtung (3) eine Klemmeinrichtung (4) zum seitlichen Klemmen der Folienbeutel (2) aufweist.

## Claims

1. Ultrasonic welding device (1), comprising a sonotrode (8) and an anvil (7) for welding foil layers together by introducing a force, wherein the foil layers are located in a receiving gap (6) provided between an effective plane (11) of the sonotrode (8) and an effective plane (12) of the anvil (7),
**characterized in that**
the central line of the direction of introducing the force of the sonotrode (8) and/or the anvil (7) and/or its preloading means (9) is inclined by an angle deviating from 0° and 90° for creating during the welding a component (ϑ) of the force introduction which is directed opposite to the direction of the gravity (G).

2. Ultrasonic welding device (1) according to claim 1,
**characterized in that**
the force introduction during the welding is performed at an angle (α) of more than 70°, preferably between 80° to 89.5°, preferably 85° to 89°, preferably 87° to 89° and specifically preferably of 88° with respect to the direction of the gravity (G).

3. Ultrasonic welding device (1) according to claim 1 or 2,
**characterized in that**
the effective plane (11) of the sonotrode (8) extends in parallel to the direction of the gravity (G).

4. Ultrasonic welding device (1) according to one of claims 1 to 3,
**characterized in that**
the effective plane (12) of the anvil (7) extends in parallel to the direction of the gravity (G).

5. Ultrasonic welding device (1) according to one of claims 1 to 4,
**characterized in that**
the anvil (7) and/or the sonotrode (8) are provided with a base surface (10a) and at least two welding lips (10) mounted underneath each other and with a spacing between them.

6. Device for handling foil bags (2), comprising a conveyor system (3) for conveying filled foil bags (2) in an upright position and an ultrasonic welding device (1) according to one of claims 1 to 5 for sealing the foil bags (2).

7. Device for handling foil bags (2) according to claim 6,
**characterized in that**
the conveyor system (3) comprises a clamping device (4) for laterally clamping the foil bags (2).

## Revendications

1. Dispositif de soudage aux ultrasons (1), comprenant une sonotrode (8) et une enclume (7) pour souder des couches de film par application d'une force, dans lequel les couches de film se trouvent dans une fente réceptrice (6) prévue entre un plan d'action (11) de la sonotrode (8) et un plan d'action (12) de l'enclume (7), **caractérisé en ce que** la ligne centrale de l'application de force de la sonotrode (8) et/ou de l'enclume (7) et/ou de son dispositif de précontrainte (9) pour générer une composante (S) de l'application de force dirigée à l'encontre de la direction de la gravité (G) est inclinée lors du soudage d'un angle (α) s'écartant de 0° et 90° par rapport à la direction de la gravité (G).

2. Dispositif de soudage aux ultrasons (1) selon la revendication 1, **caractérisé en ce que** l'application de force se fait lors du soudage sous un angle (α) par rapport à la direction de la gravité (G) supérieur à 70 °, de préférence de 80 à 89, 5 °, mieux encore de 85 à 89 °, bien mieux encore de 87 à 89 ° et, tout particulièrement, de 88 °.

3. Dispositif de soudage aux ultrasons selon la revendication 1 ou 2, **caractérisé en ce que** le plan d'action (11) de la sonotrode (8) s'étend parallèlement à la direction de la gravité (G).

4. Dispositif de soudage aux ultrasons (1) selon l'une quelconque des revendications 1 à 3, **caractérisé en ce que** le plan d'action (12) de l'enclume (7) s'étend parallèlement à la direction de la gravité (G).

5. Dispositif de soudage aux ultrasons (1) selon l'une quelconque des revendications 1 à 4, **caractérisé en ce que** l'enclume (7) et/ou la sonotrode (8) est ou sont pourvues d'une surface de base (10a) et d'au moins deux lèvres de soudage (10) aménagées à distance l'une en dessous de l'autre.

6. Dispositif de manipulation de sachets en film (2), avec un dispositif de transport (3) pour le transport vertical de sachets en film remplis (2) et avec un dispositif de soudage aux ultrasons (1) selon l'une quelconque des revendications 1 à 5 pour fermer les sachets en film (2).

7. Dispositif de manipulation de sachets en film (2) selon la revendication 6, **caractérisé en ce que** le dispositif de transport (3) présente un dispositif de serrage (4) pour le serrage latéral des sachets en film (2).
